(19)

Europäisches Patentamt
European Patent Office
Office européen des brevets

(11) **EP 3 212 324 B1**

(12) **EUROPEAN PATENT SPECIFICATION**

(45) Date of publication and mention
of the grant of the patent:
**03.07.2019 Bulletin 2019/27**

(21) Application number: **15788208.5**

(22) Date of filing: **07.10.2015**

(51) Int Cl.:
*B01J 21/06* (2006.01)     *B01J 37/02* (2006.01)
*B01J 35/00* (2006.01)     *A61L 2/232* (2006.01)
*A61L 9/20* (2006.01)     *B82Y 5/00* (2011.01)
*B82Y 30/00* (2011.01)

(86) International application number:
**PCT/IB2015/057651**

(87) International publication number:
**WO 2016/067134 (06.05.2016 Gazette 2016/18)**

(54) **TIO2 BASED NANOTUBES-POLYMER COMPOSITE MATERIAL, METHOD FOR THE PREPARATION AND USES THEREOF**

TIO2-BASIERTES NANORÖHRCHEN-POLYMER-VERBUNDSTOFFMATERIAL, VERFAHREN ZUR HERSTELLUNG UND VERWENDUNGEN DAVON

MATÉRIAU COMPOSITE DE NANOTUBES À BASE DE TIO2 ET DE POLYMÈRE, SON PROCÉDÉ DE PRÉPARATION ET SES UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2014 IT RM20140609**

(43) Date of publication of application:
**06.09.2017 Bulletin 2017/36**

(73) Proprietor: **Consiglio Nazionale delle Ricerche 00185 Roma (IT)**

(72) Inventors:
• **SANZ GONZALEZ, Ruy**
  **I-95123 Catania (IT)**
• **SCUDERI, Viviana**
  **I-95123 Catania (IT)**
• **BUCCHERI, Maria Antonietta**
  **I-95123 Catania (IT)**
• **ZIMBONE, Massimo**
  **I-95123 Catania (IT)**
• **ROMANO, Lucia**
  **I-95123 Catania (IT)**
• **IMPELLIZZERI, Giuliana,**
  **I-95123 Catania (IT)**
• **PRIVITERA, Vittorio**
  **I-95123 Catania (IT)**

(74) Representative: **Currado, Luisa et al Cantaluppi & Partners S.r.l. Via XX Settembre 98/G 00187 Roma (IT)**

(56) References cited:
**WO-A1-2010/029234**

• **DAOAI WANG ET AL: "Highly Flexible Coaxial Nanohybrids Made from Porous TiO 2 Nanotubes", ACS NANO, vol. 3, no. 5, 26 May 2009 (2009-05-26), pages 1249-1257, XP055199809, ISSN: 1936-0851, DOI: 10.1021/nn900154z cited in the application**
• **CSABA JANÁKY ET AL: "Bringing Conjugated Polymers and Oxide Nanoarchitectures into Intimate Contact: Light-Induced Electrodeposition of Polypyrrole and Polyaniline on Nanoporous WO 3 or TiO 2 Nanotube Array", JOURNAL OF PHYSICAL CHEMISTRY C, vol. 116, no. 36, 13 September 2012 (2012-09-13), pages 19145-19155, XP055199810, ISSN: 1932-7447, DOI: 10.1021/jp305181h cited in the application**

**(Cont. next page)**

- WALID BAHLOUL ET AL: "Structural characterisation and antibacterial activity of PP/TiO2 nanocomposites prepared by an in-situ sol-gel method", MATERIALS CHEMISTRY AND PHYSICS, ELSEVIER SA, SWITZERLAND, TAIWAN, REPUBLIC OF CHINA, vol. 134, no. 1, 1 March 2012 (2012-03-01) , pages 399-406, XP028417138, ISSN: 0254-0584, DOI: 10.1016/J.MATCHEMPHYS.2012.03.008 [retrieved on 2012-03-09]
- JANA MIKESOVÁ ET AL: "Nanocomposites of polypropylene/titanate nanotubes: morphology, nucleation effects of nanoparticles and properties", POLYMER BULLETIN, vol. 71, no. 4, 18 January 2014 (2014-01-18), pages 795-818, XP055199813, ISSN: 0170-0839, DOI: 10.1007/s00289-013-1093-y
- JAIME MARTÍN ET AL: "Tailored Polymer-Based Nanofibers and Nanotubes by Means of Different Infiltration Methods into Alumina Nanopores", LANGMUIR, vol. 25, no. 2, 20 January 2009 (2009-01-20), pages 1181-1187, XP055199817, ISSN: 0743-7463, DOI: 10.1021/la803127w cited in the application

**Description**

**Background of the invention**

The present invention refers to the field of nanotechnologies and in particular to the field of composite materials consisting of TiO2nTL and polymers. More in particular the present invention concerns a novel TiO2nTL/polymer composite material wherein TiO2 is in rutile or anatase form and the polymer is a thermoplastic insoluble in water and with a glass temperature or a melting temperature below 350 °C. The novel composite material is obtained by a novel process conferring particular properties to the product itself. Said composite material can be used for example as photocatalyst material, as adsorption substrate, as biocompatible material, and as antibacterial material.

**Prior Art**

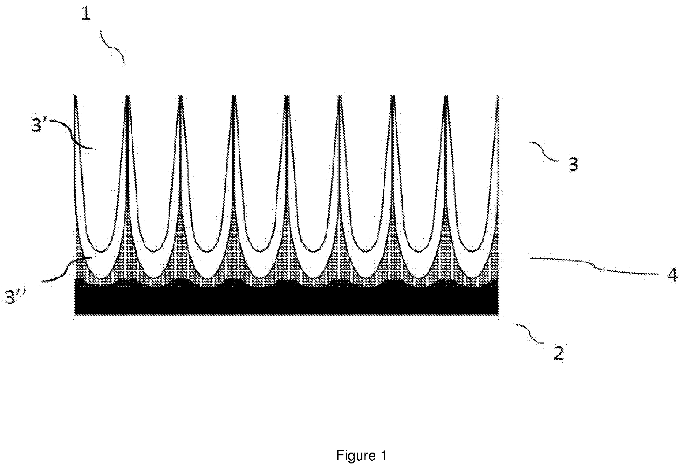

A TiO2nTL is usually composed by an arrangement of TiO2 nanotubes lying on a barrier layer of TiO2 intermediate between the nanotubes and the titanium base foil wherein the nanotubes in the an arrangement of TiO2 nanotubes project from the barrier layer of TiO2 defining an open surface opposite to a closed surface in contact with the barrier layer of TiO2, as represented in in figure 1.

The anodic synthesis of amorphous TiO2nTL, by different electrolytes, of titanium based materials is a well-known technique (P. Roy, S. Berger, P. Schmuki. Angew. Chem. Int. Ed. 2011, 50, 2904 - 2939; Indhumati Paramasivam. Self-Organized TiO2 Nanotubular Arrays and their Modifications for Photocatalytic Applications Selbstorganisierte TiO2 Nanoröhren Schichten und ihre Modifikationen für photokatalytische Anwendungen Erlangen-Nürnberg, Univ., Diss., 2012). Said technique is employed to anodize Ti in a variety of macroscopic shapes, for example foils, wires and films deposited onto different substrates. The TiO2nTL are composed by isolated TiO2 based nanotubes. Their composition varies according to the employed electrolyte and to the composition of the Ti based layer.

TiO2nTL can be applied in photocatalysis systems (Pierre Pichat. Photocatalysis and Water Purification: From Fundamentals to Recent Applications. Wiley-VCH; 1 edition (26 Mar 2013) ISBN: 978-3-527-33187-1; US patent Application N. US20100213046), biocompatible materials (Yan-Yan Song, Felix Schmidt-Stein, Steffen Berger and Patrik Schmuki. TiO2 Nano Test Tubes as a Self-Cleaning Platform for High-Sensitivity Immunoassays. Small, 2010, 6: 1180-1184.5), filtering membranes (Maggie Paulose et al. Journal of Membrane Science 319 (2008) 199-205), drug-eluting implant coatings (Lily Peng, Adam D. Mendelsohn, Thomas J. LaTempa, Sorachon Yoriya, Craig A. Grimes, and Tejal A. Desai. Long-Term Small Molecule and Protein Elution from TiO2 Nanotubes. Nano Letters 2009 9 (5), 1932-1936), and self-cleaning layers (PCT Patent Application N. PCT/DE2012/001183).

In particular, photocatalytic properties of TiO2nTL are due to the annealing process transforming TiO2 to anatase or rutile phase. The TiO2nTL may also be chemically and physically doped to include active materials, as metals.

Composite materials combining oxide nanostructures and polymers are known in the art, for example Jaime Martin and Carmen Mijangos, Tailored Polymer-Based Nanofibers and Nanotubes by Means of Different Infiltration Methods into Alumina Nanopores, Langmuir 2009 25 (2), 1181-1187 disclose the preparation of composite materials combining anodized aluminum oxide (AAO) nanotubes and polymers.

Composite materials combining TiO2nTL and polymers are already known in the art; for example, in the composite material disclosed in Daoai Wang, Ying Liu, Chengwei Wang, Feng Zhou, and Weimin Liu, ACS Nano 3 ,5, 1249-1257, 2009, a conductive polymer is electrodeposited on TiO2nTL, wherein TiO2 is in the amorphous form, to cover completely the inner surface of the TiO2nTL. The full contact of the polymer with the inner surface of TiO2 nanotubes ensures a perfect coverage without any exposed areas of the TiO2 nanotubes.

Also Csaba Janáky, Norma R. de Tacconi, Wilaiwan Chanmanee, and Krishnan Rajeshwar. Bringing Conjugated Polymers and Oxide Nanoarchitectures into Intimate Contact: Light-Induced Electrodeposition of Polypyrrole and Polyaniline on Nanoporous WO3 or TiO2 Nanotube Array, The Journal of Physical Chemistry C 2012 116 (36), 19145-19155 and Karthik Shankar,Gopal K. Mor, Haripriya E. Prakasam, Oomman K. Varghese, Craig A. Grimes, Self-Assembled Hybrid Polymer-TiO2 Nanotube Array Heterojunction Solar Cells, Langmuir 2007 23 (24), 12445-12449 disclose composite materials combining TiO2nTL and polymers wherein TiO2nTL is fully covered by a conductive polymer by electropolymerization and electrodeposition to enhance the P-N junction between TiO2nTL and polymers. Said composites are used in solar cells and therefore the Ti foil is not detached from the nanotubes arrangement because Ti acts as an electrode.

TiO2nTL/ polymer composite materials wherein the polymer is melted and deposited on the TiO2nTL to overfill the nanotubes are also known; in particular they are used as photocatalytic materials.

The TiO2nTL/ polymer composite materials of the prior art have poor photocatalytic properties because the polymer completely cover the inner surface of the nanotubes therefore reducing the area available for catalyst and because the TiO2 is in the amorphous form.

The preparation of TiO2nTL is well known in the art (P. Roy, S. Berger, P. Schmuki. Angew. Chem. Int. Ed.

2011, 50, 2904 - 2939; Indhumati Paramasivam. Self-Organized TiO2 Nanotubular Arrays and their Modifications for Photocatalytic Applications (Selbstorganisierte TiO2 Nanoröhren Schichten und ihre Modifikationen für photokatalytische Anwendungen). Erlangen-Nurnberg, Univ., Diss., 2012).

The TiO2nTL/polymer-composite materials are usually prepared by infiltrating the polymer on the TiO2nTL by wetting-based methods or by vacuum-based methods or rotation-based methods (Jaime Martin and Carmen Mijangos. Tailored Polymer-Based Nanofibers and Nanotubes by Means of Different Infiltration Methods into Alumina Nanopores. Langmuir 2009 25 (2), 1181-1187).

In the preparation of TiO2nTL/polymer-composite materials is mandatory a process step wherein TiO2nTL nanotubes arrangement layer is detached from the barrier layer and the titanium base foil, after the polymer has been applied on TiO2nTL, with the exception of the composites used in solar cells where the titanium is used as electrode. The detaching process step is usually carried out by solvent evaporation, ultrasonication, peeling-off by scotch-type tape or other adhesive such as glue, variation of physical parameters of TiO2nTL, including temperature, pH and voltage of the anodization processes, chemical etching (Guohua Liu, 2013, Synthesis and Applications of Free-standing TiO2 Nanotube Membranes ISBN: 978-82-7860-233-1 (print) ISBN: 978-82-7860-234-8 online Doctoral theses at Vestfold University College, no. 2; Maggie Paulose et al. Journal of Membrane Science 319 (2008) 199-205; Qingwei Chen and Dongsheng Xu. J. Phys. Chem. C 2009, 113, 6310-6314).

The detachment steps belonging to the prior art present several drawbacks. Solvent evaporation is at risk of not completing the detaching of the TiO2nTL and the presence of residues of solvents may need additional steps for removal. Ultrasonication, using high-pressure pulses, may lead to a not complete detaching or may cause breaking of the TiO2nTL, therefore requiring the use of additional infrastructure and or additional steps, causing time consumption. Peeling-off with scotch-tape or other adhesives requires the use of materials having sufficient adhesive properties, and the commonly polymeric materials do not present this property. Moreover, they require additional process steps, such as detaching the product the adhesive material, eliminating glued residuals with solvents, handling and fixing the final material. Variation of the physical parameters may generate a reduction in the diameter of the nanotubes down to the self-detaching during the anodization process, and a free-standing TiO2nTL is obtained floating in the electrolyte. This can be avoided by adding annealing treatment to obtain more stable TiO2nTL in anatase or rutile form, followed by anodization and soft acid etching, thus requesting a lot of time. Chemical etching requires the use of etchants, which may damage TiO2nTL due to the generation of gas bubbles below and between the TiO2 nanotubes.

A further drawback of the products of the prior art is that, at the end of the manufacturing process, the TiO2nTL/polymer composite materials are not ready-to-use final products. This is due to the fact that, the detachment processes used in the prior art, as previously disclosed, lead to obtain TiO2nTL/ polymer composites which are a free-standing or float in liquids. Therefore, they need to be fastened onto a definitive or intermediate substrate to undergo, for example, functionalization, casting, mechanization or etching to obtain the industrial final products, such as filters, membranes or other objects. Handling and fixation process of the free-standing product or floating in liquids often cause damages or breaking in the TiO2nTL/ polymer composite.

In addition, the process already known in the prior art are time consuming and poor convenient, especially when applied in an industrial scale.

The TiO2nTL/polymer-composite material of the present invention differs from those known in the prior art for several reasons: TiO2 is in the rutile or anatase form, the polymer is a thermoplastic polymer insoluble in water and with a glass temperature or a melting temperature below 350 °C. The features of the polymer allow its modelling inside TiO2 nanotubes in TiO2nTL, without filling up the nanotubes and preserving unaltered the anatase or rutile form of the TiO2 nanotubes, therefore offering a wide exposed catalytic surface. The polymer also acts as support for the nanotubes arrangement. On the other hand TiO2nTL absorbs the UV light and then protects the polymer from degradation.

The process for the preparation of the TiO2nTL/polymer-composite material of the present invention differs from the processes known in the prior art because the detachment step is carried out by heating and fast cooling down the TiO2nTL so that the polymer herein positioned partially melt, consequently allowing the easy mechanical removal of the barrier layer and the titanium base foil to obtain the final product.

The process of the present invention allows to obtain a final product which is ready to use because the TiO2nTL/polymer-composite material is not free standing but the support is given by the polymer, therefore avoiding fixing steps and allowing the final product to be easily converted to the final embodiment.

Moreover, Daoai Wang, Ying Liu, Chengwei Wang, Feng Zhou, Weimin Liu "Highly flexible coaxial Nanohybrids made from porous TiO2, 2009, ACS NANO, 3(5), 1249-1257 discloses a composite material made of polymer (polypyrrole) and TiO2 nanotube layer being obtained by means of electropolymerization of monomers of pyrrole so that the obtained polymer of polypirrole fills completely the TiO2 nanotubes, and the polymer of polypirrole covers completely the inner surface of the TiO2 nanotubes. The obtained structure is obtained thanks to the electric conductivity properties of pirrole, which on the other hand does not present any thermoplastic characteristic.

On the contrary, in the present invention the synthesis of the composite material thanks to thermoplastic polymers undergoing to temperature moulding and suction lead to a final product exhibiting part of the inner surface of the TiO2 nanotubes not covered and therefore able to react with chemical compounds.

Bahloul W. Melis F. Bounir-Legare V, Cssagnau P. "Structural Characterization and antibacterial activity of PP/TiO2 nanocomposites prepared by an in situ sol-gel method, 2012, Material Chemistry and Physics, (134) 399-406 discloses a method to synthesize TiO2/Polypropylene nanocomposites based on a hydrolysis-condensation process wherein nanoparticles in powder are dispersed in a molten polymer resulting in TiO2 nanoparticles of 10 nm in diameter embedded a Polypropylene (PP) matrix and evenly distributed in the polymer matrix.

**Technical Problem**

The technical problem of the present invention is to provide a TiO2nTL/polymer-composite material with improved properties which respect to those of the prior art; in particular high area/volume ratio surface, leading to improved catalytic properties.

The TiO2nTL/polymer-composite material of the present invention represents an arrangement of nanotubes already lying on a polymer which, is the final support. This avoids obtaining free-standing arrangement which further need to be handled in order to be attached to the final support substrate. This leads to a final product which can be immediately casted to obtain the desired embodiment.

The further technical problem is to provide a process for the preparation of the TiO2nTL/polymer-composite material which avoids all the drawbacks typically presented by the process of the prior art in particular relating to the detachment process step: handling and fixation of a free-standing TiO2nTL, destruction, damages, breaking of the TiO2nTL, removal of adhesive material residues and/or solvents.

The present invention avoids these problems due to not using additional or variation of processes or conditions, and direct attaching of the TiO2nTL to the final substrate, therefore the TiO2nTL is always fixed at least to one solid support which eliminates the handling and fixation of a free-standing TiOnTL and avoid the risk of destruction of the TiO2nTL.

**Object of the Invention**

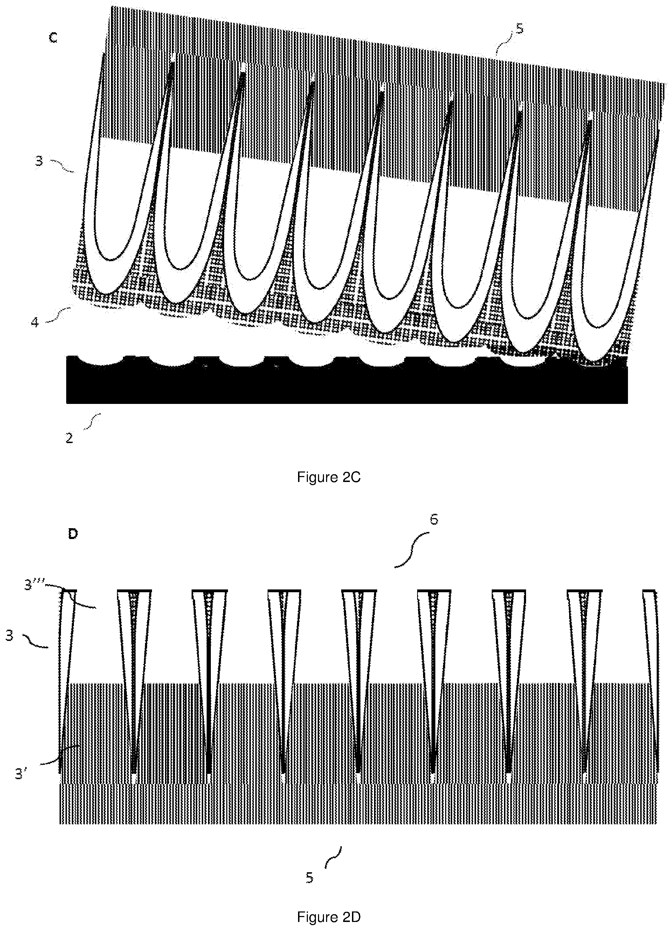

The technical problem has been solved by providing a TiO2nTL/polymer composite material (6) comprising a support made of a thermoplastic polymeric material insoluble in water and with a glass or melting temperature below 350 °C (5), an arrangement of TiO2 nanotubes (3), wherein TiO2 is in the rutile or anatase form, partially penetrated in the support by means of surface (3') and projecting from the support (5) to define an accessible open inner surface (3''') opposite to surface (3'), wherein thermoplastic polymeric material insoluble in water and with a glass or melting temperature below 350 °C is selected from the group consisting of polycarbonate, polypropylene, poly(methyl methacrylate), acrylonitrile, butadiene, styrene, nylon, polybenzimidazole, polyethylene, polystyrene, polyvinyl chloride, polyethylene terephthalate or polytetrafluoroethylene based polymer. , as shown in figure 2D.

The arrangement of TiO2 nanotubes is obtained by anodization of titanium.

The technical problem is also solved by providing a process for the preparation of the TiO2nTL/polymer composite material comprising the following steps:

a) heating a TiO2nTL-starting product (1), composed by an arrangement of TiO2 nanotubes (3) lying on a barrier layer of TiO2 (4) intermediate between the nanotubes and the titanium base foil (2), wherein nanotubes (3) project from the barrier layer (4) defining an open surface (3') opposite to the closed surface (3") in contact with the barrier layer (4), at a temperature between 100 °C and the decomposition temperature (Td) of the polymer or a temperature between the glass transition temperature (Tg) of the polymer and the decomposition temperature (Td) of the polymer when the glass transition temperature (Tg) of the polymer is higher than 100 °C;

b) positioning on the open surface of nanotubes (3') a thermoplastic polymer insoluble in water and with a glass or melting temperature below 350 °C (5) on the surface of the TiO2nTL-starting product (1) as heated in step a) for a time comprised between 1 second and 1 minute, so the thermoplastic polymer insoluble in water and with a glass or melting temperature below 350 °C (5) where it partially melts inside the arrangement of TiO2 nanotubes (3) in the open surface of nanotubes (3');

c) cooling down the product of step b) to room temperature for a time comprised between 1 second and 1 minute

d) mechanical removal of the barrier layer of TiO2 (4) and the titanium base foil (2) and the closed surface of nanotubes (3") to obtain the final product.

Furthermore, the technical problem is solved by a TiO2nTL/polymer composite material consisting of TiO2nTL and a polymer, wherein in TiO2nTL TiO2 is in the rutile or anatase form and the polymer is a thermoplastic polymer, insoluble in water and with a glass or melting temperature below 350 °C, wherein the TiO2nTL/polymer composite material (6) comprises a support made of the polymer (5), an arrangement of TiO2 nanotubes (3) partially penetrated in the support by means of surface (3') and projecting from the support (5) to define an accessible open inner surface (3") opposite to surface (3') obtained by heating TiO2nTL comprising an arrangement of TiO2 nanotubes (3) lying on a barrier layer of TiO2 (4) intermediate between the nanotubes and the titanium base foil (2), wherein nanotubes (3) project from the barrier layer (4) defining an open opposite surface (3') at a temperature between 100 °C or the glass transition temperature (Tg) if this is higher than 100 °C, and the decomposition temperature (Td) of the polymer or a temperature between the glass transition temperature (Tg) of the polymer and the decomposition temperature (Td) of the polymer when the glass transition temperature (Tg) of the polymer is higher than 100 °C and positioning the polymer (5) on the open surface (3') of an arrangement of TiO2 nanotubes and cooling down to room temperature for a time comprised between 1 second and 1 minute; and mechanically removing the a barrier layer of TiO2 (4) the titanium base foil (2) and the closed surface of nanotubes (3").

A further object of the present invention is the TiO2nTL/polymer composite for use as a photocatalytic material or as an absorption substrate or as a coating or part of coating for bone implants, or as an antibacterial material.

Other objects of the present invention are articles manufactured comprising the TiO2nTL/polymer composite.

Further features of the present invention will be clear from the following detailed description with references to experimental examples and attached figures.

**Brief description of the figures**

Figure 1 reports a schematic representation of the TiO2nTL.

Figure 2 represents the process steps to obtain the TiO2nTL/polymer composite material and the final product obtained.

Figure 3 shows the bacterial survival of E.Coli treated with TiO2nTL/polymer composite material, TiO2nTL or PC foil; UV and untreated are the controls.

Figure 4 shows the X-ray diffraction pattern of an annealed TiO2nTL on titanium and PC/TiO2nTL composite material.

Figure 5 shows the total transmission of light spectra of a 1 mm thick PC foil and PC/TiO2nTL composite material.

**Detailed description of the invention**

Definitions

Within the meaning of the present invention TiO2nTL is composed by an arrangement of TiO2 nanotubes lying on a barrier layer of TiO2 intermediate between the nanotubes and the titanium base foil wherein the nanotubes in the an arrangement of TiO2 nanotubes project from the barrier layer of TiO2 defining an open surface opposite to a closed surface in contact with the barrier layer of TiO2, as represented in in figure 1.

Within the meaning of the present invention The TiO2nTL 1 means an arrangement of TiO2 nanotubes 3 lying on a barrier layer of TiO2 4 intermediate between the nanotubes and the titanium base foil 2, wherein nanotubes 3 project from the barrier layer 4 defining an open surface 3' opposite to the closed surface 3" in contact with the barrier layer 4 as disclosed in figure 1.

TiO2nTL is obtained by anodization process in suitable electrolytes of a titanium based foils with nanotubes inner diameters ranging from 10 to 300 nm, and nanotubes lengths from 50 nm to 100 micrometres.

TiO2nTL can be, for example, prepared by standard anodization process in suitable electrolytes of a titanium based foils, such as TiAl6V4 alloy (Chang Yao, Elliott B. Slamovich and Thomas J. Webster, Enhanced osteoblast functions on anodized titanium with nanotube-like structures, Journal of Biomedical Materials Research Part A Volume 85A, Issue 1, pages 157-166, April 2008), TiNb (A. Ghicov, S. Aldabergenova, H. Tsuchiya, P. Schmuki, Angewandte Chemie. 2006, 118, 7150 - 7153) TiZr (K. Yasuda, P. Schmuki, Electrochimica Acta 2007, 52, 4053), TiTa (H. Tsuchiya, T. Akaki, J. Nakata, D. Terada, N. Tsuji, Y. Koizumi, Y. Minamino, P. Schmuki, S. Fujimoto, Corrosion Science 2009, 51, 1528.) TiW (Y. C. Nah, A. Ghicov, D. Kim, S. Berger, P. Schmuki, Journal of American Chemical Society. 2008, 130, 16154), TiMo (N. K. Shrestha, Y. C. Nah, H. Tsuchiya, P. Schmuki, Chemical Communications. 2009, 15, 2008), and TiAl, (H. Tsuchiya, S. Berger, J. M. Macak, A. Ghicov, P. Schmuki, Electrochemistry Communications. 2007, 9, 2397).

Within the meaning of the present invention, thermoplastic polymer means a polymeric compound which becomes pliable or mouldable above a specific temperature and returns to a solid state upon cooling.

Within the meaning of the present invention, rutile and anatase refer to the forms of $TiO_2$ within the TiO2nTL.

Within the meaning of the present invention, glass transition temperature (Tg) means the temperature at which an amorphous solid becomes glass.

Within the meaning of the present invention, melting temperature (Tm) means the temperature at which the polymers change from solid to liquid. Within the meaning of the present invention room temperature means temperature range between 20 and 26 °C, approximately 25°C, with an average of 23 °C.

Within the meaning of the present invention, temperature of degradation (Td) means the temperature at which the polymers suffer a depolymerization or an alternative chemical reaction that alters their chemical characteristics.

Object of the present invention is a TiO2nTL/polymer composite material 6 comprising a support made of a thermoplastic polymeric material insoluble in water and with a glass or melting temperature below 350 °C 5 an arrangement of TiO2 nanotubes 3, wherein TiO2 is in the rutile or anatase form inserted partially penetrated in the support by means of surface 3' an projecting from the support 5 to define an accessible open inner surface 3''' opposite to surface 3', wherein thermoplastic polymeric material insoluble in water and with a glass or melting temperature below 350 °C is selected from the group consisting of polycarbonate, polypropylene, poly(methyl methacrylate), acrylonitrile, butadiene, styrene, nylon, polybenzimidazole, polyethylene, polystyrene, polyvinyl chloride, polyethylene terephthalate or polytetrafluoroethylene based polymer.', as shown in figure 2D.

The arrangement of TiO2 nanotubes 3 is obtained by anodization of titanium.

Preferably the thermoplastic polymer insoluble in water and with a glass or melting temperature below 350 °C is selected from the group consisting of polycarbonate, polypropylene and polyethylene terephthalate.

Optionally suitable additives are added to the polymer.

The choice of the suitable additive can be made by the person with ordinary skills in the field and depends on the polymer used in the composite material, depends on the features of the product to be manufactured and comprising the TiO2nTL/polymer composite material of the invention and the manufacturing conditions of said product. Examples of suitable additives are: stabilizers, adhesion promoters, biocides, anti-fogging agents, antistatic agents, anti-oxidants, bonding, blowing agents, foaming agents, dispersants, fillers, extenders, smoke suppressants, impact modifiers, initiators, lubricants, micas, pigments, colorants, dyes, plasticizers, release agents, silanes, titanates, zirconates; slip agents, anti-blocking agent, stabilizers, stearates, ultraviolet light absorbers, viscosity regulators, waxes; catalyst deactivators.

Preferably in the TiO2nTL/polymer composite material the nanotubes of TiO2nTL have an inner diameter from 10 to 300 nm.

Preferably in the TiO2nTL/polymer composite material the nanotubes of TiO2nTL have a length from 50 nm to 100 micrometers.

In TiO2nTL/polymer composite material, of the present invention the inner surface of TiO2 nanotubes is accessible and the polymer is modelled to be partially penetrated herein leaving unaltered the anatase or rutile form of the nanotubes, which is mandatory for the catalytic properties of the composite material.

In the TiO2nTL/polymer composite material, object of the present invention the combination between the TiO2nTL wherein TiO2 is in the rutile or anatase form and the polymer, wherein the polymer is a thermoplastic polymer insoluble in water and with a glass or melting temperature below 350 °C, provides improved photocatalytic properties that cannot be obtained by simply adding common additives to the polymer. Moreover TiO2nTL absorbs UV light thus protecting the polymer from degradation.

The further technical problem is solved by providing a process for the preparation of the TiO2nTL/polymer composite material comprising the following steps:

a) heating a TiO2nTL-starting product (1), composed by an arrangement of TiO2 nanotubes (3) lying on a barrier layer of TiO2 (4) intermediate between the nanotubes and the titanium base foil (2), wherein nanotubes (3) project from the barrier layer (4) defining an open surface (3') opposite to the closed surface (3") in contact with the barrier layer (4), at a temperature between 100 °C and the decomposition temperature (Td) of the polymer or a temperature between the glass transition temperature (Tg) of the polymer and the decomposition temperature (Td) of the polymer when the glass transition temperature (Tg) of the polymer is higher than 100 °C;

b) positioning on the open surface of nanotubes (3') a thermoplastic polymer insoluble in water and with a glass or melting temperature below 350 °C (5) on the surface of the TiO2nTL-starting product (1) as heated in step a) for a time comprised between 1 second and 1 minute, so the thermoplastic polymer insoluble in water and with a glass or melting temperature below 350 °C (5) where it partially melts inside the arrangement of TiO2 nanotubes (3) in the open surface of nanotubes (3');

c) cooling down the product of step b) to room temperature for a time comprised between 1 second and 1 minute

d) mechanical removal of the barrier layer of TiO2 (4) and the titanium base foil (2) and the closed surface of nanotubes (3") to obtain the final product.

Preferably in step a) the temperature is comprised between 150 and 350 °C:
As an option, if the surface of TiO2nTL is not clean, a standard cleaning step should be performed before step a) to remove organic contaminants and/or pollutants.

Standard cleaning steps may be performed by successive immersions in suitable degreasing agents such as acetone, isopropanol and finally in water, or exposition to U.V. light (Determination of photocatalytic activity of surfaces in an aqueous medium by degradation of methylene blue. ISO 10678:2010(E). International Organization for Standardization (2010). Switzerland) or reactive oxygen treatment (N. Ishida, D. Fujita. Superhydrophilic TiO2 surfaces generated by reactive oxygen treatment. J. Vac. Sci. Technol. A, 30 (2012) 051402). The cleaning processes should by applied with an intensity and duration according to the level of contamination of TiO2nTL.

The surface of TiO2nTL may be not clean because it has been in contact with bare hands or contaminant, such as in an oven also used for organic materials or in the atmosphere containing hydrocarbon species.

As an option, in step b) additionally an external pressure is applied.

Preferably the applied pressure is between 0.102 and 0.204 atm.

The application of the external pressure assure an ameliorated contact between the TiO2nTL-starting product as obtained in step a), and the thermoplastic polymer with a glass or melting temperature below 350 °C.

In step b) the thermoplastic polymer partially heats and/or partially melts.

In step c) the change in temperature generates a low pressure inside the TiO2 nanotubes and then the absorption of the partially melted thermoplastic polymer inside the TiO2 nanotubes.

At the temperature in step c) the thermoplastic polymer presents better mechanical properties for handling.

Preferably in step d) mechanical removal is mechanical stripping.

Optionally after step d) mechanical stripping is followed by mechanical polishing or ion milling.

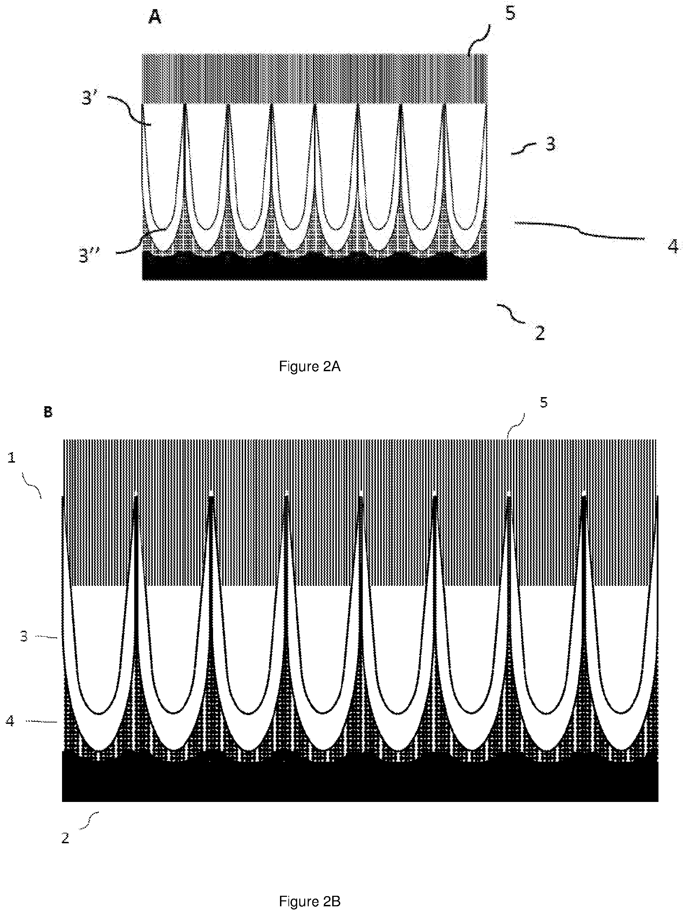

The steps of the process are outlined in figure 2: in panel (A) step b) is shown wherein the polymer 5 is positioned on the TiO2nTL-starting product 1, composed by an arrangement of TiO2 nanotubes 3 lying on a barrier layer of TiO2 4 intermediate between the nanotubes and the titanium base foil 2, wherein nanotubes 3 project from the barrier layer 4 defining an open surface 3' opposite to the closed surface 3" in contact with the barrier layer 4, previously heated in step a) the polymer 5 is positioned on the open surface of nanotubes 3'; in panel (B) is shown the cooling down (step c) of the product of step b) wherein the polymer 5 partially melts inside the TiO2 nanotubes 3 in the open surface of nanotubes 3'; panels (C) shows the detachment step d) wherein the a barrier layer of TiO2 4, titanium base foil 2 and the closed surface of nanotubes 3" are removed to obtain the final product, which is shown in panel D. The TiO2nTL/polymer composite material, being the final product 6 of the process, as shown in figure 2 panel D, therefore comprises a support made of the polymer 5 an arrangement of TiO2 nanotubes 3 inserted in the support by means of surface 3' an projecting from the support 5 to define an open surface 3''' opposite to surface 3'. Therefore in the TiO2nTL/polymer-composite material being the final product the arrangement of TiO2 nanotubes is already lying on the final support, being the polymer, while the arrangement of the TiO2 nanotubes offers high area/volume ratio of the catalytic surface.

As an option, if the surface of TiO2nTL 1 is not clean, a standard cleaning step should be performed before step a) to remove organic contaminants and/or pollutants.

Standard cleaning steps may be performed by successive immersions in suitable degreasing agents such as acetone, isopropanol and finally in water, or exposition to U.V. light (Determination of photocatalytic activity of surfaces in an aqueous medium by degradation of methylene blue. ISO 10678:2010(E). International Organization for Standardization (2010). Switzerland) or reactive oxygen treatment (N. Ishida, D. Fujita. Superhydrophilic TiO2 surfaces generated by reactive oxygen treatment. J. Vac. Sci. Technol. A, 30 (2012) 051402). The cleaning processes should by applied with an intensity and duration according to the level of contamination of TiO2nTL.

The surface of TiO2nTL 1 may be not clean because it has been in contact with bare hands or contaminant, such as in an oven also used for organic materials or in the atmosphere containing hydrocarbon species.

The final product can be optionally further functionalized by including active ingredients.

Optionally, the final product optionally undergoes to casting, preferably thermoforming, to obtain an object of desired shape.

Alternatively the final product undergoes to fragmentation or dissolution and subsequent mechanization or suitable synthesis process to obtain the desired object.

Alternatively the final product undergoes to etching methods, preferably U.V. or ion track for the manufacture of filtration membranes.

Another object of the present invention is a TiO2nTL/polymer composite material 6 consisting of TiO2nTL 1 and a polymer 5 wherein in TiO2nTL 1 TiO2 is in the rutile or anatase form and the polymer is a thermoplastic polymer insoluble in water and with a glass or melting temperature below 350 °C, wherein TiO2nTL/polymer composite material 6 comprises a support made of the polymer 5, an arrangement of TiO2 nanotubes 3 partially penetrated in the support by means of surface 3' and projecting from the support 5 to define an accessible open inner surface 3''' opposite to surface 3' obtained by heating TiO2nTL comprising an arrangement of TiO2 nanotubes 3 lying on a barrier layer of TiO2 4 intermediate between the nanotubes and the titanium base foil 2, wherein nanotubes 3 project from the barrier layer

4 defining an open surface 3' opposite to the closed surface 3" in contact with the barrier layer 4 at a temperature between 100 °C or the glass transition temperature (Tg) if this is higher than 100 °C, and the decomposition temperature (Td) of the polymer or a temperature between the glass transition temperature (Tg) of the polymer and the decomposition temperature (Td) of the polymer when the glass transition temperature (Tg) of the polymer is higher than 100 °C; positioning the polymer 5 on the open surface 3' of an arrangement of TiO2 nanotubes cooling down to room temperature for a time comprised between 1 second and 1 minute; and mechanically removing the a barrier layer of TiO2 4 the titanium base foil 2 and the closed surface of nanotubes 3".

Optionally, before heating the surface of the TiO2nTL is cleaned by standard methods.

The TiO2nTL/polymer composite material of the present invention is used as a photocatalytic material or as an absorption substrate or as a release substrate or as a biocompatible material or as an antibacterial material.

Preferably a photocatalytic material is a TiO2nTL/polymer composite material wherein the polymer is Polypropylene, or polycarbonate or polyethylene or PET.

Preferably an absorption substrate is a TiO2nTL/polymer composite material wherein the polymer is Polypropylene, or polycarbonate or PET.

Preferably a release substrate is a TiO2nTL/polymer composite material wherein the polymer is Polypropylene, or polycarbonate or PET.

Preferably an antibacterial material is a TiO2nTL/polymer composite material wherein the polymer is Polypropylene, or polycarbonate or PET, more preferably polycarbonate.

The TiO2nTL/polymer composite material of the present invention can be used for manufacturing articles such as containers, including bottles and packages or part of them, cases, pipes or part of pipes, lids, panels, windows, working surfaces of furniture or coatings, curtains, shutters, parts pumping systems of liquids or gases (blades of propellers), catalyser in a fluid bed reactor, also in the form of active pills to make water potable inside a PET bottle, catalytic coatings, active surfaces for biosensors and gas sensors, coatings or part of coatings for medical bone implants, substrates or part of lab-on-chip technology; part of microfluidics devices; part of paints or coatings for restoration work of buildings; part of paints or coatings for internal floors and walls; part of touch screen coatings, part of textures and fibres for dressing and lines, bactericidal aprons and clothes.

In a preferred embodiment of the present invention, TiO2nTL/PP composite material is obtained by obtaining TiO2nTL by anodization of a Ti disk and subsequent annealing, according to known procedures, followed by heating the TiO2nTL at 200 °C, positioning a PP foil and performing detaching step by applying mechanical force followed by mechanical polishing with SiO2 colloid.

In a preferred embodiment of the present invention, TiO2nTL/PC composite material is obtained by obtaining TiO2nTL by anodization of a Ti disk and subsequent annealing, according to known procedures, followed by heating the TiO2nTL at 220 °C, positioning a PC foil and performing detaching step by applying mechanical force followed by mechanical polishing with SiO2 colloid.

In a preferred embodiment of the present invention, Au decorated TiO2nTL/PC composite material is obtained by obtaining TiO2nTL by anodization of a Ti disk and subsequent annealing, according to known procedures, followed by heating the TiO2nTL at 220 °C, positioning a PC foil, performing detaching step by applying mechanical force followed by mechanical polishing with SiO2 colloid and decorated with Au layer.

In a preferred embodiment of the present invention, TiO2nTL/PET composite material is obtained by deriving a PET foil melting PET from a bottle, obtaining TiO2nTL by anodization of a Ti disk and subsequent annealing, followed by heating 280 °C,, positioning a PET foil and performing detaching step by applying mechanical force followed by mechanical polishing with SiO2 colloid.

## Examples

Example 1 Photodegradation

The photodegradation activity of a PP/TiO2nTL composite material prepared according to the present invention (herein named C1), composite obtained by commonly used full infiltration method of PP (herein named C2), PC/TiO2nTL composite material prepared according to the present invention (herein named C3), composite obtained by commonly used full infiltration method of PC (herein named C4), PET/TiO2nTL composite material prepared according to the present invention (herein named C5), composite obtained by commonly used full infiltration method of PET (herein named C6), Bare Polycarbonate foil (BPCF), Bare Polypropylene foil (BPPF), Bare polyethylene terephthalate foil (BPETF) or TiO2nTL only was tested on the organic dye methylene blue.

The employed TiO2nTL of C1, C2, C3, C4, C5 and C6 was manufactured as follows: titanium (Ti) disk (99.6+% purity, 0.25mm thick and 15 mm in diameter, provided by Goodfellow Inc.) with one of its sides isolated, was submitted to anodization process of 120 minutes, at constant voltage of 50 V, employing an suitable electrolyte composed of: 250 ml Ethylene Glycol (Sigma Aldrich), 0.912 g Ammonium Fluoride (Sigma Aldrich) and 4.5 ml water. A cuvette of stainless-steel served as container and as cathode. After the anodization process the obtained TiO2nTL on Ti disk was submitted to isopropanol bath in order to remove remaining electrolyte. Obtained TiO2nTL presented a total thickness of 22 micrometers and 65 nm of inner diameter of the TiO2 nanotubes. The TiO2nTL on Ti disk was annealed for two hours at 400 °C in air atmosphere in order to generate a phase transition of TiO2 from amorphous to anatase phase. Polypropylene (PP) foil, with an approximate thickness of 2 mm, was obtained by melting PP beads (Sigma Aldrich). Parts of this foil were employed in the manufacture of the composites and as control test (BPPF) and as the polymer material for C1 and C2.

C1 was prepared as follows: an annealed TiO2nTL on titanium disk was placed on a hot-plate and heated at 200 °C in air. After TiO2nTL on Titanium disk reached 200 °C, PP foil was carefully placed on the top surface of the TiO2nTL, assuring a complete contact with PP foil and top surface of TiO2nTL, for 2 seconds. After this elapsed time, the ensemble was removed from the hot-plate and immediately the ensemble was placed in a metallic surface at room temperature (heat sink), with the metallic surface in contact with the back surface of the ensemble (not the PP side). This allows a faster cool-down rate of the TiOnTL on Ti compared to that of PP. As a result, a lower pressure is generated inside the TiO2 nanotubes before the solidification of PP. After the ensemble of TiO2nTL on Ti and PP foil reached room temperature, the PP-TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PP-TiO2nTL composite are accessible to reactives contributing to the photocatalytic reaction.

C2 was prepared as follows: PP foil was placed on top of an annealed TiO2nTL on Titanium disk. The ensemble was placed on a hot-plate and heated at 200 °C in air. After 1 hour all the PP is melted. After this, the hot-plate is disconnected and the ensemble was leaved on the hot plate until it reached room temperature. The PP-TiO2nTL composite was detached from Ti disk by mechanical force. The elimination of the barrier layer and bottom of nanopores, was carried out by soft mechanical polishing with SiO2 colloid (MasterMead®, Buehler), after this process, the PP covered the most of the inner surface of TiO2 nanotubes of the PP-TiO2nTL composite and thus the most part of the TiO2 nanotubes surface is not accessible to reactives not contributing to the photocatalytic reaction.

PC foil, 1 mm thick foil was obtained by melting polycarbonate foils (TPP Techno Plastic Products AG). Parts of this foil will be employed to fabricate the TiO2nTL/PC composite and also employed as a Bare PC foil test material. Parts of this foil were employed in the manufacture of the composites and as control test (BPCF) and as the polymer material for C3 and C4.

C3 was prepared as follows: an Annealed TiO2nTL on titanium disk was placed on a hot-plate and heated at 220 °C in air. After TiO2nTL on Titanium disk reached 220 °C, PC foil was carefully placed on the top surface of the TiO2nTL, assuring a complete contact with PC foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PC side). This allows a faster cool-down rate of the TiOnTL on Ti compared to that of PC. As a result, a lower pressure is generated inside the TiO2 nanotubes before the solidification of PC. After the ensemble of TiO2nTL on Ti and PC foil reached room temperature, the PC/TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PC/TiO2nTL composite are accessible to reagents contributing to the photocatalytic reaction.

C4 was prepared as follows: PC foil was placed on top of an annealed TiO2nTL on Titanium disk. The ensemble was placed on a hot-plate and heated at 220 °C in air. After 1 hour all the PC is melted. After this, the hot-plate is disconnected and the ensemble was leaved on the hot plate until it reached room temperature. The PP/TiO2nTL composite was detached from Ti disk by mechanical force. The elimination of the barrier layer and bottom of nanopores, was carried out by soft mechanical polishing with SiO2 colloid (MasterMead®, Buehler), after this process, the PC covered the most of the inner surface of TiO2 nanotubes of the PC/TiO2nTL composite and thus the most part of the TiO2 nanotubes surface is not accessible to reactives not contributing to the photocatalytic reaction.

Polyethylene terephthalate (PET) foil, 1 mm thick, was obtained by melting PET from a mineral water bottle. Parts of this foil will be employed to fabricate the TiO2nTL/PET composite and also employed as a Bare PET Foil test material. Parts of this foil were employed in the manufacture of the composites and as control test (BPETF) and as the polymer material for C5 and C6.

C5 was prepared as follows: an annealed TiO2nTL on titanium disk was placed on a hot-plate and heated at 280 °C in air. After TiO2nTL on Titanium disk reached 200 °C,PET foil was carefully placed on the top surface of the TiO2nTL, assuring a complete contact with PET foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PET side). This allows a faster cool-down rate of the TiOnTL on Ti compared to that of PET. As a result, a lower pressure is generated inside the TiO2 nanotubes before the solidification of PET. After the ensemble of TiO2nTL on Ti and PET foil reached room temperature, the PET-TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PET-TiO2nTL composite are accessible to reactives contributing to the photocatalytic reaction.

C6 was prepared as follows: PET foil was placed on top of an annealed TiO2nTL on Titanium disk. The ensemble was placed on a hot-plate and heated at 280 °C in air. After 1 hour all the PET is melted. After this, the hot-plate is disconnected and the ensemble was leaved on the hot plate until it reached room temperature. The PET-TiO2nTL composite was detached from Ti disk by mechanical force. The elimination of the barrier layer and bottom of nanopores, was carried out by soft mechanical polishing with SiO2 colloid (MasterMead®, Buehler), after this process, the PET covered the most of the inner surface of TiO2 nanotubes of the PET-TiO2nTL composite and thus the most part of the TiO2 nanotubes surface is not accessible to reactives not contributing to the photocatalytic reaction.

A standard test as disclosed in Determination of photocatalytic activity of surfaces in an aqueous medium by degradation of methylene blue. ISO 10678:2010(E) International Organization for Standardization (2010) Switzerland, was used to evaluate the photocatalytic properties of BPPF, BPCF, BPETF, TiO2nTL on Ti disk, C1, C2, C3, C4, C5 and, C6. Briefly, the standard ISO 10678:2010 evaluates the discoloration of Methylene Blue (MB) dye solution, $1.5 \cdot 10^{-5}$ M, in contact with a given surface under UVA light exposition. The evaluation is performed by measuring the time evolution of the optical absorbance of the MB solution at 664 nm. This optical parameter has a linear relationship with the concentration of MB. Observance of the previous preconditioning of samples was carried out. This preconditioning step consists in a previous exposition of tested specimens to UVA light source for 24 hours followed by the immersion of tested samples in MB solution, in dark conditions, until no additional discoloration of MB was detected. This preconditioning process allows discerning the contribution of the adsorption of MB molecules on sample's surfaces from MB photocatalyzed decomposition. After preconditioning process the samples, were immersed in a fresh $1.5 \cdot 10^{-5}$ M MB solution and were exposed to UVA illumination. The measured intensity of the employed UVA light source at the surface of BPPF, BPCF, BPETF, TiO2nTL on Ti disk, C1, C2, C3, C4, C5 and C6 was 1.1 mW cm$^{-2}$, with a wavelength of 368 $\pm$ 2 nm. Optical absorbance of each MB solution was monitored each 20 minutes for a minimum of three hours. A MB solution was also exposed to same illumination conditions as control for self-discoloration.

The discoloration of the MB control solution, that in contact with BPPF, that in contact with BPCF and that in contact with BPETF under applied UVA exposure was negligible (below instrumental experimental error). Therefore no self-discoloration contribution of MB existed and PC, PP and PET polymers did not exhibit any contribution to MB photocatalytic degradation.

The time evolution of the concentration of MB followed a first order reaction rate. The obtained discoloration time rates, K, for the TiO2nTL on Ti disk, C1, C2, C3, C4, C5 and, C6 followed a first order reaction defined by

$$\ln(C/C_0) = -K \bullet t;$$

where:

t is the elapsed time of UVA exposure.

C is the concentration of reactant measured at elapsed time t.

$C_0$ is the initial MB concentration.

K serves to evaluate the photocatalytic yield the tested materials. The higher K the better photocatalytic yield of the material. The obtained values of K, normalized to the macroscopic size of the tested materials are presented in the following table 1.

Table 1

|  | K [min$^{-1}$ cm$^{-2}$] |
| --- | --- |
| TiO2nT on Ti | $2.66 \pm 0.01 \times 10^{-3}$ |
| C1 | $6.20 \pm 0.1 \times 10^{-4}$ |
| C2 | $5.6 \pm 0.1 \times 10^{-7}$ |
| C3 | $3.30 \pm 0.01 \times 10^{-4}$ |

(continued)

|  | K [min$^{-1}$ cm$^{-2}$] |
| --- | --- |
| C4 | 5.8 $\pm$ 0.1 10$^{-7}$ |
| C5 | 5.4 $\pm$ 0.1 10$^{-4}$ |
| C6 | 6.0 $\pm$ 0.2 10$^{-7}$ |

K of C1 material is three orders of magnitude higher than K obtained for C2. C1 presented a higher proportion of not covered inner surface of TiO2 nanotubes. However, in C2 only a minimal top surface of the TiO2 nanotubes contributes to the photocatalytic reaction due to full coverage of the inner part of TiO2 nanotubes by the PP. K of C3 material is three orders of magnitude higher than K obtained for C4. C3 presented a higher proportion of not covered inner surface of TiO2 nanotubes. However, in C4 only a minimal top surface of the TiO2 nanotubes contributes to the photocatalytic reaction due to the complete coverage of the inner part of TiO2 nanotubes by the PC. K of C5 material is three orders of magnitude higher than K obtained for C6. C5 presented a higher proportion of not covered inner surface of TiO2 nanotubes. However, in C6 only a minimal top surface of the TiO2 nanotubes contributes to the photocatalytic reaction due to full coverage of the inner part of TiO2 nanotubes by the PET. K values of C2, C4 and C6 have same values within experimental error due to the same amount of TiO2 nanotubes exposed areas and since neither PP, PC and PET present any contribution to photocatalytic reaction. The enhanced photocatalytic activity of the composite is demonstrated.

Example 2 antibacterial activity

The antibacterial activity of bare Polycarbonate (PC) foil, TiO2nT on Ti disk and TiO2nTL/PC composite material was evaluated.

PC foil, 1 mm thick foil was obtained by melting polycarbonate foils (TPP Techno Plastic Products AG). Parts of this foil will be employed to fabricate the TiO2nTL/PC composite and also employed as a Bare PC foil test material.

The employed TiO2nTL on Ti on the manufacture of tested TiO2nTL and the composite TiO2nTL/PC was as follows. Titanium (Ti) disk (99.6+% purity, 0.25mm thick and 15 mm in diameter, provided by Goodfellow Inc.) with one of its sides isolated, was submitted to anodization process of 30 minutes, at constant voltage of 50 V, employing an suitable electrolyte composed of: 250 ml Ethylene Glycol (Sigma Aldrich), 0.912 g Ammonium Fluoride (Sigma Aldrich) and 4.5 ml water. A cuvette of stainless-steel served as container and as cathode. After the anodization process the obtained TiO2nTL on Ti disk was submitted to isopropanol bath in order to remove remaining electrolyte. Obtained TiO2nTL presented a total thickness of 7.5 micrometers and 65 nm of inner diameter of the TiO2 nanotubes. The TiO2nTL on Ti disk was annealed for two hours at 400 °C in air atmosphere in order to generate a phase transition of TiO2 from amorphous to anatase phase. An Annealed TiO2nTL on Titanium disk was placed on a hot-plate and heated at 220 °C in air. After TiO2nTL on Titanium disk reached 220 °C, PC foil was carefully placed on the top surface of the TiO2nTL, assuring a complete contact with PC foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PC side). This allows a faster cool-down rate of the TiOnTL on Ti compared to that of PC. As a result, a lower pressure is generated inside the TiO2 nanotubes before the solidification of PC. After the ensemble of TiO2nTL on Ti and PC foil reached room temperature, the PC-TiO2nTL composite material was detached from Ti disk by mechanical force. The elimination of the barrier layer and bottom of nanopores, was carried out by soft mechanical polishing with SiO2 colloid (MasterMead®, Buehler),

Antibacterial activity was tested by measuring the survival rate of Escherichia coli ATCC 25922 after exposure to UVA light through Colony Forming Unit (CFU) count. The measured intensity of the employed UVA light source at the surface of TiO2nTL/PC composite material, TiO2nTL and a bare PC foil was 1.1 mW cm$^{-2}$, with a wavelength of 368 $\pm$ 2 nm.

Bacteria were diluted up to 10$^6$ CFU/ml and exposed either to TiO2nTL or PC foil only and to TiO2nTL/PC composite material. Untreated and exposed to UV only bacteria were treated in parallel as controls. Experiments were made in triplicates.

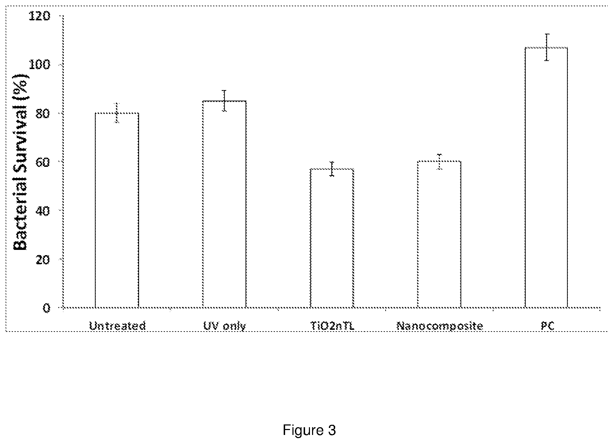

The results are shown in figure 3 wherein in 1h time, TiO2nTL/PC composite material reduces bacterial survival to 60%, comparable to TiO2nTL. Exposure of Escherichia coli to UVA light in absence of TiO2 reduced bacterial survival only up to 85%, thus damage due to UVA light only is modest. PC seems to be an opportune substrate for bacterial growth, even under UVA exposure. Thus, antibacterial activity of TiO2nTL/PC composite material makes it a material suitable for application when a quick and easy disinfection effect is needed.

Example 3 Enhanced photoactivity by decoration

The enhanced photodegradation activity of PC/TiO2nTL composite material prepared according to the present invention (herein named D1) and gold decorated PC/TiO2nTL composite material prepared according to the present invention (herein named D2), were tested on the organic dye methylene blue.

D1 and TiO2nTL were prepared following the same fabrication steps as presented in Example 2.

D2 was prepared following the same fabrication steps as D1 but a 5 nanometer thick gold film was deposited on top of it surface by sputtering technique employing a Emitech K550X (Quorum Technologies) sputter system at 10 nA of current, argon atmosphere ($2 \cdot 10^{-2}$ mbar) for 150 seconds.

A standard test (ISO 10678:2010) under same conditions as Example 1 was used to evaluate the photocatalytic properties of D1 and D2. A MB solution and a PC film were also exposed to same illumination conditions as control for self-discoloration.

The discoloration of the MB control solution and PC film under applied UVA light exposure was negligible (below instrumental experimental error). Therefore no self-discoloration contribution of MB existed and PC polymer did not exhibit any contribution to MB photo-catalytic degradation.

The time evolution of the concentration of MB followed a first order reaction rate. The obtained discoloration time rates, K, for D1 and, D2 followed a first order reaction defined by

$$\ln(C/C0) = -K \cdot t;$$

where:

t is the elapsed time of UVA exposure.

C is the concentration of reactant measured at elapsed time t.

C0 is the initial MB concentration.

K serves to evaluate the photocatalytic yield the tested materials. The higher K the better photocatalytic yield of the material. The obtained values of K, normalized to the macroscopic size of the tested materials are presented in the following table 2.

Table 2

|  | D1 | D2 |
|---|---|---|
| K [$min^{-1}$ $cm^{-2}$] | $2.0 \pm 0.1$ $10^{-4}$ | $1.4 \pm 0.1$ $10^{-3}$ |

K of D2 material is almost seven times higher than K obtained for D1. Since the only difference between D1 and D2 is the decoration with the gold layer obtained by a standard industrial availed technique, the enhanced photo-catalytic activity of the decorated composite is demonstrated.

Example 4 casting

Polyethylene terephthalate (PET) foil, 1 mm thick, was obtained by melting PET from a mineral water bottle.

PC foil, 1 mm thick foil was obtained by melting polycarbonate foils (TPP Techno Plastic Products AG).

Polypropylene (PP) foil, with an approximate thickness of 1 mm, was obtained by melting PP beads (Sigma Aldrich).

The employed TiO2nTL on Ti on the manufacture the PET/TiO2nTL composite material, PC/TiO2nTL composite material and PP/TiO2nTL composite material was as follows: titanium (Ti) disk (99.6+% purity, 0.25mm thick and 15 mm in diameter, provided by Goodfellow Inc.) with one of its sides isolated, was submitted to anodization process of 30 minutes, at constant voltage of 50 V, employing a suitable electrolyte composed of: 250 ml Ethylene Glycol (Sigma Aldrich), 0.912 g Ammonium Fluoride (Sigma Aldrich) and 4.5 ml water. A cuvette of stainless-steel served as container and as cathode. After the anodization process the obtained TiO2nTL on Ti disk was submitted to isopropanol bath in order to remove remaining electrolyte. Obtained TiO2nTL presented a total thickness of 7.5 micrometers and 65 nm of inner diameter of the TiO2 nanotubes. The TiO2nTL on Ti disk was annealed for two hours at 400 °C in air atmosphere in order to generate a phase transition of TiO2 from amorphous to anatase phase. An Annealed TiO2nTL on Titanium disk was placed on a hot-plate and heated at 280 °C in air. After TiO2nTL on Titanium disk reached 280 °C, PET foil was carefully placed on the top surface of the TiO2nTL, assuring a complete contact with PET foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PET side). This allows a faster cool-down rate of the TiOnTL on Ti compared to that of PET. As a result, a lower pressure is generated inside the TiO2 nanotubes before the solidification of PET. After the ensemble of TiO2nTL on Ti and PET foil reached room temperature, the PET-TiO2nTL composite was detached from Ti disk by mechanical force. The elimination of the barrier layer and bottom of nanopores, was carried out by soft mechanical polishing with SiO2 colloid (MasterMead®, Buehler). The TiO2nTL/PET composite material was casted by applying a pressure of 1 kPa against a half-cylinder mold of 5 mm in diameter at 180°C for 5 second. Cast was performed with the open TiO2 nanotubes in contact with the mold and same process but with the bare polymer side of the composite in contact with the mold.

PC/TiO2nTL was manufacture following the same method described in example 2. The PC/TiO2nTL composite material was casted by applying a pressure of 1 kPa against a half-cylinder mold of 5 mm in diameter at 180°C for 5 second. Cast was performed with the open TiO2 nanotubes in contact with the mold and same process but with the bare polymer side of the composite in contact with the mold.

PP/TiO2nTL was manufacture following the same method described in example 1. The PP/TiO2nTL composite material was casted by applying a pressure of 1 kPa against a half-cylinder mold of 5 mm in diameter at 150°C for 5 second. Cast was performed with the open TiO2 nanotubes in contact with the mold and same process but with the bare polymer side of the composite in contact with the mold.

The adhesion of TiO2 nanotubes was confirmed by scanning electronic microscope imaging characterization in both cases after the casting process and 30 minutes in water and ultrasound bath for the PET/TiO2nTL composite, PC/TiO2nTL composite and PP/TiO2nTL composite. The images showed fractures in the TiO2 nanotube layer, due to the generated casting strains, but not broken TiO2 nanotubes. The nanotubes were separate from each other but not from the polymer, endorsed by the shapes of cracks which reproduces the contours of adjacent TiO2 nanotubes layers. Thus, the application of thermoforming process method for casting the polymer/TiO2nTL is demonstrated.

Example 5 Absorption and release of a liquid substance

The absorption capabilities of a liquid substance by a PP/TiO2nTL composite material prepared according to the present invention (herein named E1), composite obtained by commonly used full infiltration method of PP (herein named E2), PC/TiO2nTL composite material prepared according to the present invention (herein named E3), composite obtained by commonly used full infiltration method of PC (herein named E4), PET/TiO2nTL composite material prepared according to the present invention (herein named E5), composite obtained by commonly used full infiltration method of PET (herein named E6), Bare Polypropylene foil (BPPF), Bare Polycarbonate foil (BPCF), Bare Polyethylene terephthalate foil (BPETF), or TiO2nTL only was tested on the organic dye methylene blue.

The employed TiO2nTL of E1, E2, E3, E4, E5 and E6 was manufactured as follows: titanium (Ti) disk (99.6+% purity, 0.25mm thick and 15 mm in diameter, provided by Goodfellow Inc.) with one of its sides isolated, was submitted to anodization process of 120 minutes, at constant voltage of 50 V, employing an suitable electrolyte composed of: 250 ml Ethylene Glycol (Sigma Aldrich), 0.912 g Ammonium Fluoride (Sigma Aldrich) and 4.5 ml water. A cuvette of stainless-steel served as container and as cathode. After the anodization process the obtained TiO2nTL on Ti disk was submitted to isopropanol bath in order to remove remaining electrolyte. Obtained TiO2nTL presented a total thickness of 22 micrometers and 65 nm of inner diameter of the TiO2 nanotubes. The TiO2nTL on Ti disk was annealed for two hours at 400 °C in air atmosphere in order to generate a phase transition of TiO2 from amorphous to anatase phase. Polypropylene (PP) foil, with an approximate thickness of 2 mm, was obtained by melting PP beads (Sigma Aldrich). Parts of this foil were employed in the manufacture of the composites and as control test (BPPF) and as the polymer material for E1 and E2.

E1 was prepared as follows: an Annealed TiO2nTL on titanium disk was placed on a hot-plate and heated at 200 °C in air. After TiO2nTL on Titanium disk reached 200 °C, PP foil was carefully placed on the top surface of the TiO2nTL, assuring a complete contact with PP foil and top surface of TiO2nTL, for 2 seconds. After this elapsed time, the ensemble was removed from the hot-plate and immediately the ensemble was placed in a metallic surface at room temperature (heat sink), with the metallic surface in contact with the back surface of the ensemble (not the PP side). This allows a faster cool-down rate of the TiOnTL on Ti compared to that of PP. As a result, a lower pressure is generated inside the TiO2 nanotubes before the solidification of PP. After the ensemble of TiO2nTL on Ti and PP foil reached room temperature, the PP/TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PP/TiO2nTL composite are accessible to liquid substances contributing to their absorption.

E2 was prepared as follows: PP foil was placed on top of an annealed TiO2nTL on Titanium disk. The ensemble was placed on a hot-plate and heated at 200 °C in air. After 1 hour all the PP is melted. After this, the hot-plate is disconnected and the ensemble was leaved on the hot plate until it reached room temperature. The PP-TiO2nTL composite was detached from Ti disk by mechanical force. The elimination of the barrier layer and bottom of nanopores, was carried out by soft mechanical polishing with SiO2 colloid (MasterMead®, Buehler), after this process, the PP covered the most of the inner surface of TiO2 nanotubes of the PP-TiO2nTL composite and thus the most part of the TiO2 nanotubes surface is not accessible to liquid substances not contributing to their absorption.

PC foil, 1 mm thick foil was obtained by melting polycarbonate foils (TPP Techno Plastic Products AG). Parts of this foil will be employed to fabricate the TiO2nTL/PC composite and also employed as a Bare PC foil test material. Parts of this foil were employed in the manufacture of the composites and as control test (BPCF) and as the polymer material for E3 and E4.

E3 was prepared as follows: an Annealed TiO2nTL on titanium disk was placed on a hot-plate and heated at 220 °C in air. After TiO2nTL on Titanium disk reached 220 °C, PC foil was carefully placed on the top surface of the TiO2nTL, assuring a complete contact with PC foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PC side). This allows a faster cool-down rate of the TiOnTL on Ti compared to that of PC. As a result, a lower pressure is generated inside the TiO2 nanotubes before the solidification of PC. After the ensemble of TiO2nTL on Ti and PC foil reached room temperature, the PC/TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PC/TiO2nTL composite are accessible to liquid substances contributing to their absorption.

E4 was prepared as follows: PC foil was placed on top of an annealed TiO2nTL on Titanium disk. The ensemble was placed on a hot-plate and heated at 220 °C in air. After 1 hour all the PC is melted. After this, the hot-plate is disconnected and the ensemble was leaved on the hot plate until it reached room temperature. The PP/TiO2nTL composite was detached from Ti disk by mechanical force. The elimination of the barrier layer and bottom of nanopores, was carried out by soft mechanical polishing with SiO2 colloid (MasterMead®, Buehler), after this process, the PC covered the most of the inner surface of TiO2 nanotubes of the PC/TiO2nTL composite and thus the most part of the TiO2 nanotubes surface is not accessible to liquid substances not contributing to their absorption.

Polyethylene terephthalate (PET) foil, 1 mm thick, was obtained by melting PET from a mineral water bottle. Parts of this foil will be employed to fabricate the TiO2nTL/PET composite and also employed as a Bare PET Foil test material. Parts of this foil were employed in the manufacture of the composites and as control test (BPETF) and as the polymer material for E5 and E6.

E5 was prepared as follows: an annealed TiO2nTL on titanium disk was placed on a hot-plate and heated at 280 °C in air. After TiO2nTL on Titanium disk reached 200 °C, PET foil was carefully placed on the top surface of the TiO2nTL, assuring a complete contact with PET foil and top surface of TiO2nTL, for 3 seconds. After this elapsed time, the ensemble was removed from the hot-plate and immediately the ensemble was placed in a metallic surface at room temperature (heat sink), with the metallic surface in contact with the back surface of the ensemble (not the PET side). This allows a faster cool-down rate of the TiOnTL on Ti compared to that of PET. As a result, a lower pressure is generated inside the TiO2 nanotubes before the solidification of PET. After the ensemble of TiO2nTL on Ti and PET foil reached room temperature, the PET-TiO2nTL composite was detached from Ti disk by mechanical force. The elimination of the barrier layer and bottom of nanopores, was carried out by soft mechanical polishing with SiO2 colloid (MasterMead®, Buehler), after this process, most of the inner surface of TiO2 nanotubes of the PET-TiO2nTL composite are accessible to liquid substances contributing to their absorption.

E6 was prepared as follows: PET foil was placed on top of an annealed TiO2nTL on Titanium disk. The ensemble was placed on a hot-plate and heated at 280 °C in air. After 1 hour all the PET is melted. After this, the hot-plate is disconnected and the ensemble was leaved on the hot plate until it reached room temperature. The PET-TiO2nTL composite was detached from Ti disk by mechanical force. The elimination of the barrier layer and bottom of nanopores, was carried out by soft mechanical polishing with SiO2 colloid (MasterMead®, Buehler), after this process, the PET covered the most of the inner surface of TiO2 nanotubes of the PET-TiO2nTL composite and thus the most part of the TiO2 nanotubes surface is not accessible to liquid substances not contributing to their absorption..

The method to evaluate the absorption capacities of a liquid compound by the considered material consisted in the measurement of the variation of the concentration of a liquid dye, Methylene Blue (MB), after the immersion of the materials for 12 hours in known volumes, 2 ml, of $1.5 \cdot 10^{-5}$ M MB aqueous solutions. The variation of the concentration MB aqueous solutions was obtained by the measurement of the optical absorbance of the solutions at 664 nm. This variation in concentration is the amount of absorbed MB by the materials. The measured amounts of absorbed MB are presented in Table 3.

Table 3

|  | Absorbed MB (mol cm$^{-2}$) |
|---|---|
| TiO2nTL | $1.5 \pm 0.1 \ 10^{-8}$ |
| E1 | $6 \pm 1 \ 10^{-9}$ |
| E2 | $<1 \ 10^{-9}$ |
| E3 | $1.1 \pm 0.1 \ 10^{-8}$ |
| E4 | $<1 \ 10^{-9}$ |
| E5 | $1.3 \pm 0.1 \ 10^{-8}$ |
| E6 | $<1 \ 10^{-9}$ |
| BPPF | $<1 \ 10^{-9}$ |
| BPCF | $<1 \ 10^{-9}$ |
| BPETF | $<1 \ 10^{-9}$ |

The absorbed amounts of MB by E2, E4, E6, BPPF, BPCF and BPETF were below the experimental error of the employed system, the absorption capabilities of MB molecules by these materials can be considered negligible. The absorption of MB by TiO2nTL is in the same order of magnitude of E3 and E5, meaning that the most part of the TiO2 nanotubes in PC/TiO2nTL and PET/TiO2nTL contribute to the absorption of MB dye. The absorption of MB molecules by E1 is almost a half of than exhibited by TiO2nTL meaning that the amount of availed area of TiO2 nanotubes of E1 sample is lower than in TiO2nTL and E3, but more than six times higher than E2. The absorption capabilities of the tested composites are probed.

In order to measure the release capabilities of a previously absorbed liquid compound by the composites E1, E3, E5 and TiO2nTL, these materials were immersed in 2 ml of deionized water for 12 hours, after the previous mentioned absorption test. The evaluation of the released MB was obtained by the measurement of the optical absorbance of the obtained solutions at 664 nm. The measured amounts of released MB are presented in Table 4.

Table 4

|  | TiO2nTL | E1 | E3 | E5 |
|---|---|---|---|---|
| Released MB (mol cm$^{-2}$) | $3.4 \pm 0.1 \ 10^{-9}$ | $1.7 \pm 0.1 \ 10^{-9}$ | $3.2 \pm 0.1 \ 10^{-9}$ | $5 \pm 1 \ 10^{-9}$ |

The amount of released MB by E1 is the 28% of the previously absorbed, the amount released by E3 is 34% and the amount released by E5 is the 38%. Although these amounts are smaller than that released by TiO2nTL which correspond to 44% of previously absorbed MB, the obtained released magnitudes showed by E1, E3 and E5 are comparable magnitude. The efficiency of releasing a liquid compound by composites is probed.

Example 6 Diffraction patterns

X-ray diffraction patters were obtained by using Bruker D-500 diffractometer operating with a CuK$_{\alpha 1}$ radiation (wavelength 1.5405 Å) at a fixed angle of incidence of 2°, and detector scanning 2$\Theta$ from 15 to 60°.

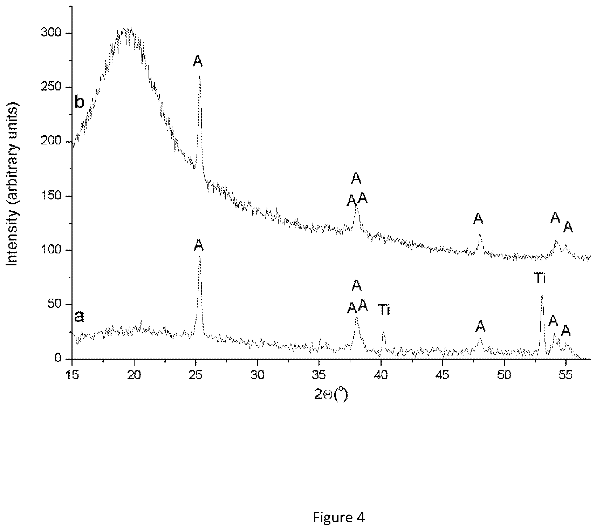

The comparison between the X-ray diffraction pattern of an annealed TiO2nTL on titanium and PC/TiO2nTL composite material of the present invention are shown in figure 4. The diffraction pattern "a" corresponds to annealed TiO2nTL on titanium and diffraction pattern "b" corresponds to PC/TiO2nTL composite material, according to the present invention. "A" letters in the graphs denote diffraction peaks associated to anatase TiO2 phase and diffraction peaks associated to titanium are denoted with "Ti" marks. The diffraction pattern "a" shows that the material is only composed by anatase phase and titanium. The diffraction pattern "b" shows that the PC/TiOnTL composite material, according to the present invention, presents an amorphous halo, clear from 15° to 24°, which correspond to PC polymer and peaks associated to anatase TiO2 phase with the same crystallographic structures present in TiO2nTL on titanium. In addition diffraction pattern "b" does not exhibit any peak associated to titanium, in agreement with the fact that TiO2nTL is stripped from the titanium. Therefore, the process for the preparation of the TiO2nTL/polymer composite material does not alter the crystallographic structure of TiO2nTL.

Example 7 Total Light Transmission Spectra

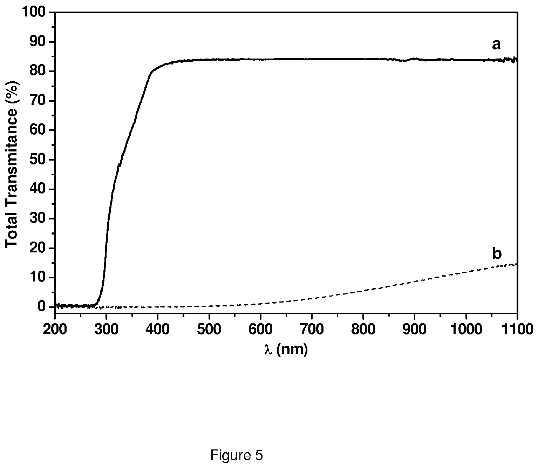

Total Light transmission spectra were obtained by using a UV/VIS spectrophotometer (Perkin-Elmer Lambda 35) in a wavelength range between 200 and 1100 nm equipped with an integration sphere. The comparison between the light transmission spectra of a polycarbonate foil of 1 mm thick, obtained by melting polycarbonate foils (TPP Techno Plastic Products AG) and PC/TiO2nTL composite material of the present invention, measured with the nanotubes side exposed to the incident light, are shown in figure 5. The transmission spectrum "a" corresponds to a polycarbonate film (1mm thick) and the transmission spectrum pattern "b" corresponds to PC/TiO2nTL composite material, according to the present invention. The transmission spectrum "a" shows the suppression of transmitted light for wavelengths shorter than 400 nm. These wavelengths shorter than 400 nm contribute to the degradation of PC. The transmission spectrum "b" shows the complete absorption of light of wavelengths shorter than 550 nm. The TiO2 nanotubes of the TiO2nTL are responsible of the complete adsorption of these wavelengths. The TiO2 nanotubes of the TiO2nTL act as a light protective layer avoiding the absorption of light with wavelengths shorter than 400 nm by the PC material. Therefore, the process for the preparation of the TiO2nTL/polymer composite material prevents the photodegradation of the polymer material.

**Claims**

1. A TiO2nTL/polymer composite material (6) comprising a support made of a thermoplastic polymeric material insoluble in water and with a glass or melting temperature below 350 °C (5), an arrangement of TiO2 nanotubes (3), wherein TiO2 is in the rutile or anatase form, partially penetrated in the support by means of surface (3') and projecting from the support (5) to define an accessible open inner surface (3''') opposite to surface (3'), wherein thermoplastic polymeric material insoluble in water and with a glass or melting temperature below 350 °C is selected from the group consisting of polycarbonate, polypropylene, poly(methyl methacrylate), acrylonitrile, butadiene, styrene, nylon, polybenzimidazole, polyethylene, polystyrene, polyvinyl chloride, polyethylene terephthalate or polytetrafluoroethylene based polymer.

2. The TiO2nTL/polymer composite material of claim 1 wherein the an arrangement of TiO2 nanotubes (3) is obtained by anodization of titanium.

3. The TiO2nTL/polymer composite material of anyone of claims 1-2 wherein nanotubes of TiO2nTL have an inner diameter from 10 to 300 nm.

4. The TiO2nTL/polymer composite material of anyone of claims 1-3 wherein nanotubes of TiO2nTL have a length from 50 nm to 100 micrometers.

5. Process for the preparation of the TiO2nTL/polymer composite material of anyone of claims 1-4 comprising the following steps:

   a) heating a TiO2nTL-starting product (1), composed by an arrangement of TiO2 nanotubes (3) lying on a barrier layer of TiO2 (4) intermediate between the nanotubes and the titanium base foil (2), wherein nanotubes (3) project from the barrier layer (4) defining an open surface (3') opposite to the closed surface (3") in contact with the barrier layer (4), at a temperature between 100 °C and the decomposition temperature (Td) of the polymer or a temperature between the glass transition temperature (Tg) of the polymer and the decomposition temperature (Td) of the polymer when the glass transition temperature (Tg) of the polymer is higher than 100 °C;
   b) positioning on the open surface of nanotubes (3') a thermoplastic polymer insoluble in water and with a glass or melting temperature below 350 °C (5) on the surface of the TiO2nTL-starting product (1) as heated in step a) for a time comprised between 1 second and 1 minute, so the thermoplastic polymer insoluble in water and with a glass or melting temperature below 350 °C (5) where it partially melts inside the arrangement of TiO2 nanotubes (3) in the open surface of nanotubes (3');
   c) cooling down the product of step b) to room temperature for a time comprised between 1 second and 1 minute
   d) mechanical removal of the barrier layer of TiO2 (4) and the titanium base foil (2) and the closed surface of nanotubes (3") to obtain the final product.

6. Use of the TiO2nTL/polymer composite material of claims 1 or 2 as an absorption substrate.

7. Use of the TiO2nTL/polymer composite material of claims 1 or 2 as a coating or part of coating for bone implants..

8. Use of the TiO2nTL/polymer composite material of claims 1 or 2 as an antibacterial material.

9. TiO2nTL/polymer composite material according to claim 1 consisting of TiO2nTL and a polymer, wherein in TiO2nTL TiO2 is in the rutile or anatase form and the polymer is a thermoplastic polymer insoluble in water and with a glass or melting temperature below 350 °C, wherein TiO2nTL/polymer composite material (6) comprises a support made of the polymer (5), an arrangement of TiO2 nanotubes (3) partially penetrated in the support by means of surface (3') and projecting from the support (5) to define an accessible open inner surface (3''') opposite to surface (3') obtained by heating TiO2nTL comprising an arrangement of TiO2 nanotubes (3) lying on a barrier layer of TiO2 (4) intermediate between the nanotubes and the titanium base foil (2), wherein nanotubes (3) project from the barrier layer (4) defining an open surface (3') opposite to the closed surface (3") in contact with the barrier layer (4) at a temperature between 100 °C or the glass transition temperature (Tg) if this is higher than 100 °C, and the decomposition temperature (Td) of the polymer or a temperature between the glass transition temperature (Tg) of the polymer and the decomposition temperature (Td) of the polymer when the glass transition temperature (Tg) of the polymer is higher than 100 °C and positioning the polymer (5) on the open surface (3') of an arrangement of TiO2 nanotubes and cooling down to room temperature for a time comprised between 1 second and 1 minute; and mechanically removing the a barrier layer of TiO2 (4) the titanium base foil (2) and the closed surface of nanotubes (3").

**Patentansprüche**

1. TiO2nTL/Polymer-Kompositmaterial (6), umfassend einen Träger, hergestellt aus einem thermoplastischen Polymermaterial, das unlöslich in Wasser ist und eine Glas- oder Schmelztemperatur unter 350 °C (5) besitzt, eine Anordnung von TiO2-Nanoröhren (3), worin TiO2 in der Rutil- oder Anatas-Form vorliegt, teilweise eingedrungen in den Träger mittels Oberfläche (3') und herausragend aus dem Träger (5), um eine zugängliche offene, innere Oberfläche (3''') gegenüber der Oberfläche (3') zu definieren, worin das thermoplastische Polymermaterial, das unlöslich in Wasser ist und eine Glas- oder Schmelztemperatur unter 350 °C besitzt, ausgewählt ist aus der Gruppe, bestehend aus Polycarbonat, Polypropylen, Poly(methylmethacrylat), Acrylnitril, Butadien, Styrol, Nylon, Polybenzimidazol, Polyethylen, Polystyrol, Polyvinylchlorid, Polyethylenterephthalat oder Polytetrafluorethylenbasiertem Polymer.

2. TiO2nTL/Polymer-Kompositmaterial nach Anspruch 1, worin die Anordnung von TiO2-Nanoröhren (3) durch Anodisieren von Titan erhalten wird.

3. TiO2nTL/Polymer-Kompositmaterial nach einem der Ansprüche 1-2, worin die Nanoröhren der TiO2nTL einen Innendurchmesser von 10 bis 300 nm haben.

4. TiO2nTL/Polymer-Kompositmaterial nach einem der Ansprüche 1-3, worin die Nanoröhren der TiO2nTL eine Länge von 50 nm bis 100 Mikrometer haben.

5. Verfahren zur Herstellung des TiO2nTL/Polymer-Kompositmaterials nach einem der Ansprüche 1-4, die folgenden Schritte umfassend:

   a) Erhitzen eines TiO2nTL-Ausgangsprodukts (1), bestehend aus einer Anordnung von TiO2-Nanoröhren (3), die auf einer Barriereschicht von TiO2 (4) intermediär zwischen den Nanoröhren und der Titan-Basisfolie (2) liegt, worin Nanoröhren (3) aus der Barriereschicht (4) herausragen, gegenüber der geschlossenen Oberfläche (3") eine offene Oberfläche (3') definieren, in Kontakt mit der Barriereschicht (4), bei einer Temperatur zwischen 100 °C und der Zersetzungstemperatur (Td) des Polymers, oder einer Temperatur zwischen Glasübergangstemperatur (Tg) des Polymers und der Zersetzungstemperatur (Td) des Polymers, wenn die Glasübergangstemperatur (Tg) des Polymers höher als 100 °C ist;
   b) Positionieren eines thermoplastischen Polymers, das in Wasser unlöslich ist und eine Glas- oder Schmelztemperatur unter 350 °C besitzt (5), auf der offenen Oberfläche von Nanoröhren (3') auf der Oberfläche des TiO2nTL-Ausgangsprodukts (1), Erhitzen des thermoplastischen Polymers, das unlöslich in Wasser ist und eine Glas- oder Schmelztemperatur unter 350 °C besitzt (5) wie in Schritt a) für einen Zeitraum, der zwischen 1 Sekunde und 1 Minute umfasst, wo es teilweise innerhalb der Anordnung von TiO2-Nanoröhren (3) in der offenen Oberfläche von Nanoröhren (3') schmilzt;
   c) Abkühlen des Produkts aus Schritt b) auf Raumtemperatur für einen Zeitraum, der zwischen 1 Sekunde und 1 Minute umfasst;
   d) mechanisches Entfernen der Barriereschicht aus TiO2 (4) und der Titan-Basisfolie (2) und der geschlossenen

**EP 3 212 324 B1**

Oberfläche von Nanoröhren (3"), um das Endprodukt zu erhalten.

6. Verwendung des TiO2nTL/Polymer-Kompositmaterials der Ansprüche 1 oder 2 als Absorptionssubstrat.

7. Verwendung des TiO2nTL/Polymer-Kompositmaterials der Ansprüche 1 oder 2 als Beschichtung oder Teil einer Beschichtung für Knochenimplantate.

8. Verwendung des TiO2nTL/Polymer-Kompositmaterials der Ansprüche 1 oder 2 als antibakterielles Material.

9. TiO2nTL/Polymer-Kompositmaterial, gemäß Anspruch 1, bestehend aus TiO2nTL und einem Polymer, worin TiO2 im TiO2nTL in der Rutil- oder Anatas-Form vorliegt und das Polymer ein thermoplastisches Polymer ist, das unlöslich in Wasser ist und eine Glas- oder Schmelztemperatur unter 350 °C besitzt, worin das TiO2nTL/Polymer-Kompositmaterial (6) einen Träger, hergestellt aus dem Polymer (5), eine Anordnung von TiO2-Nanoröhren (3), teilweise eingedrungen in den Träger mittels Oberfläche (3') und herausragend aus dem Träger (5), um eine zugängliche offene, innere Oberfläche (3''') gegenüber der Oberfläche (3') zu definieren, umfasst, erhalten durch Erhitzen von TiO2nTL, umfassend eine Anordnung von TiO2-Nanoröhren (3), die auf einer Barriereschicht von TiO2 (4) intermediär zwischen den Nanoröhren und der Titan-Basisfolie (2) liegen, worin Nanoröhren (3) aus der Barriereschicht (4) herausragen, eine offene Oberfläche (3') gegenüber der geschlossenen Oberfläche (3") definieren, in Kontakt mit der Barriereschicht (4), bei einer Temperatur zwischen 100 °C oder der Glasübergangstemperatur (Tg), wenn diese höher ist als 100 °C, und der Zersetzungstemperatur (Td) des Polymers, oder einer Temperatur zwischen der Glasübergangstemperatur (Tg) des Polymers und der Zersetzungstemperatur (Td) des Polymers, wenn die Glasübergangstemperatur (Tg) des Polymers höher ist als 100 °C, und Positionieren des Polymers (5) auf der offenen Oberfläche (3') einer Anordnung von TiO2-Nanoröhren und Abkühlen auf Raumtemperatur für einen Zeitraum, der zwischen 1 Sekunde und 1 Minute umfasst; und mechanisches Entfernen der Barriereschicht aus TiO2 (4) und der Titan-Basisfolie (2) und der geschlossenen Oberfläche von Nanoröhren (3").

**Revendications**

1. Matériau composite en TiO2nTL/polymère (6) comprenant un support réalisé en un matériau polymère thermoplastique insoluble dans l'eau et ayant une température de transition vitreuse ou de fusion inférieure à 350 °C (5), un agencement de nanotubes en TiO2 (3), dans lequel le TiO2 est sous la forme rutile ou anatase, ayant partiellement pénétré dans le support au moyen d'une surface (3') et dépassant du support (5) pour définir une surface intérieure ouverte accessible (3''') opposée à la surface (3'), dans lequel le matériau polymère thermoplastique insoluble dans l'eau et ayant une température de transition vitreuse ou de fusion inférieure à 350 °C est sélectionné dans le groupe consistant en un polymère à base de polycarbonate, polypropylène, poly(méthacrylate de méthyle), acrylonitrile, butadiène, styrène, nylon, polybenzimidazole, polyéthylène, polystyrène, polychlorure de vinyle, polytéréphtalate d'éthylène ou polytétrafluoroéthylène.

2. Matériau composite en TiO2nTL/polymère selon la revendication 1, dans lequel l'agencement de nanotubes en TiO2 (3) est obtenu par anodisation de titane.

3. Matériau composite en TiO2nTL/polymère selon l'une quelconque des revendications 1 et 2, dans lequel des nanotubes en Ti02nTL ont un diamètre intérieur de 10 à 300 nm.

4. Matériau composite en TiO2nTL/polymère selon l'une quelconque des revendications 1 à 3, dans lequel des nanotubes en Ti02nTL ont une longueur de 50 nm à 100 micromètres.

5. Procédé pour la préparation du matériau composite en TiO2nTL/polymère de l'une quelconque des revendications 1 à 4, comprenant les étapes suivantes :

   a) le chauffage d'un produit de démarrage en TiO2nTL (1), composé d'un agencement de nanotubes en TiO2 (3) se trouvant sur une couche barrière de TiO2 (4) intermédiaire entre les nanotubes et la feuille de base en titane (2), dans lequel des nanotubes (3) dépassent de la couche barrière (4) définissant une surface ouverte (3') opposée à la surface fermée (3") en contact avec la couche barrière (4), à une température entre 100 °C et la température de décomposition (Td) du polymère ou une température entre la température de transition vitreuse (Tg) du polymère et la température de décomposition (Td) du polymère lorsque la température de transition vitreuse (Tg) du polymère est supérieure à 100 °C ;

b) le positionnement sur la surface ouverte de nanotubes (3') d'un polymère thermoplastique insoluble dans l'eau et ayant une température de transition vitreuse ou de fusion inférieure à 350 °C (5) sur la surface du produit de démarrage en TiO2nTL (1) chauffé à l'étape a) pendant une durée comprise entre 1 seconde et 1 minute, de sorte que le polymère thermoplastique insoluble dans l'eau et ayant une température de transition vitreuse ou de fusion inférieure à 350 °C (5) où il fond partiellement à l'intérieur de l'agencement de nanotubes en TiO2 (3) dans la surface ouverte de nanotubes (3') ;

c) le refroidissement du produit de l'étape b) à température ambiante pendant une durée comprise entre 1 seconde et 1 minute

d) l'élimination mécanique de la couche barrière de TiO2 (4) et de la feuille de base en titane (2) et de la surface fermée de nanotubes (3") pour obtenir le produit final.

6. Utilisation du matériau composite en TiO2nTL/polymère des revendications 1 ou 2 en tant que substrat d'absorption.

7. Utilisation du matériau composite en TiO2nTL/polymère des revendications 1 ou 2 en tant que revêtement ou partie de revêtement pour des implants osseux.

8. Utilisation du matériau composite en TiO2nTL/polymère des revendications 1 ou 2 en tant que matériau antibactérien.

9. Matériau composite en TiO2nTL/polymère selon la revendication 1 constitué de TiO2nTL et d'un polymère, dans lequel, dans le TiO2nTL le TiO2 est sous la forme rutile ou anatase et le polymère est un polymère thermoplastique insoluble dans l'eau et ayant une température de transition vitreuse ou de fusion inférieure à 350 °C, dans lequel le matériau composite en TiO2nTL/polymère (6) comprend un support réalisé en le polymère (5), un agencement de nanotubes en TiO2 (3) ayant partiellement pénétré dans le support au moyen d'une surface (3') et dépassant du support (5) pour définir une surface intérieure ouverte accessible (3''') opposée à la surface (3') obtenue en chauffant le TiO2nTL comprenant un agencement de nanotubes en TiO2 (3) se trouvant sur une couche barrière en TiO2 (4) intermédiaire entre les nanotubes et la feuille de base en titane (2), dans lequel les nanotubes (3) dépassent de la couche barrière (4) définissant une surface ouverte (3') opposée à la surface fermée (3") en contact avec la couche barrière (4) à une température entre 100 °C ou la température de transition vitreuse (Tg) si celle-ci est supérieure à 100 °C, et la température de décomposition (Td) du polymère ou une température entre la température de transition vitreuse (Tg) du polymère et la température de décomposition (Td) du polymère lorsque la température de transition vitreuse (Tg) du polymère est supérieure à 100 °C et le positionnement du polymère (5) sur la surface ouverte (3') d'un agencement de nanotubes en TiO2 et le refroidissement à température ambiante pendant une durée comprise entre 1 seconde et 1 minute ; et l'élimination mécanique de la couche barrière en TiO2 (4), de la feuille de base en titane (2) et de la surface fermée de nanotubes (3").

Figure 1

Figure 2A

Figure 2B

Figure 2C

Figure 2D

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100213046 A
- DE 2012001183 W

### Non-patent literature cited in the description

- **P. ROY ; S. BERGER ; P. SCHMUKI.** *Angew. Chem. Int. Ed.,* 2011, vol. 50, 2904-2939
- **PIERRE PICHAT.** Photocatalysis and Water Purification: From Fundamentals to Recent Applications. Wiley-VCH, 26 March 2013
- **YAN-YAN SONG ; FELIX SCHMIDT-STEIN ; STEFFEN BERGER ; PATRIK SCHMUKI.** TiO2 Nano Test Tubes as a Self-Cleaning Platform for High-Sensitivity Immunoassays. *Small,* 2010, vol. 6, 1180-1184
- **MAGGIE PAULOSE et al.** *Journal of Membrane Science,* 2008, vol. 319, 199-205
- **LILY PENG ; ADAM D. MENDELSOHN ; THOMAS J. LATEMPA ; SORACHON YORIYA ; CRAIG A. GRIMES ; TEJAL A. DESAI.** Long-Term Small Molecule and Protein Elution from TiO2 Nanotubes. *Nano Letters,* 2009, vol. 9 (5), 1932-1936
- **JAIME MARTIN ; CARMEN MIJANGOS.** Tailored Polymer-Based Nanofibers and Nanotubes by Means of Different Infiltration Methods into Alumina Nanopores. *Langmuir,* 2009, vol. 25 (2), 1181-1187
- **DAOAI WANG ; YING LIU ; CHENGWEI WANG ; FENG ZHOU ; WEIMIN LIU.** *ACS Nano,* 2009, vol. 3 (5), 1249-1257
- **CSABA JANÁKY ; NORMA R. DE TACCONI ; WILAIWAN CHANMANEE ; KRISHNAN RAJESHWAR.** Bringing Conjugated Polymers and Oxide Nanoarchitectures into Intimate Contact: Light-Induced Electrodeposition of Polypyrrole and Polyaniline on Nanoporous WO3 or TiO2 Nanotube Array. *The Journal of Physical Chemistry C,* 2012, vol. 116 (36), 19145-19155
- **KARTHIK SHANKAR ; GOPAL K. MOR ; HARIPRIYA E. PRAKASAM ; OOMMAN K. VARGHESE ; CRAIG A. GRIMES.** Self-Assembled Hybrid Polymer-TiO2 Nanotube Array Heterojunction Solar Cells. *Langmuir,* 2007, vol. 23 (24), 12445-12449
- Self-Organized TiO2 Nanotubular Arrays and their Modifications for Photocatalytic Applications. **INDHUMATI PARAMASIVAM.** Selbstorganisierte TiO2 Nanoröhren Schichten und ihre Modifikationen für photokatalytische Anwendungen. Univ., Diss, 2012
- **GUOHUA LIU.** *Synthesis and Applications of Free-standing TiO2 Nanotube Membranes,* 2013, ISBN 978-82-7860-233-1
- **QINGWEI CHEN ; DONGSHENG XU.** *J. Phys. Chem. C,* 2009, vol. 113, 6310-6314
- **DAOAI WANG ; YING LIU ; CHENGWEI WANG ; FENG ZHOU ; WEIMIN LIU.** Highly flexible coaxial Nanohybrids made from porous TiO2. *ACS NANO,* 2009, vol. 3 (5), 1249-1257
- **BAHLOUL W. ; MELIS F. ; BOUNIR-LEGARE V ; CSSAGNAU P.** Structural Characterization and antibacterial activity of PP/TiO2 nanocomposites prepared by an in situ sol-gel method. *Material Chemistry and Physics,* 2012, vol. 134, 399-406
- **CHANG YAO ; ELLIOTT B. SLAMOVICH ; THOMAS J. WEBSTER.** Enhanced osteoblast functions on anodized titanium with nanotube-like structures. *Journal of Biomedical Materials Research Part A,* April 2008, vol. 85A (1), 157-166
- **A. GHICOV ; S. ALDABERGENOVA ; H. TSUCHIYA ; P. SCHMUKI.** *Angewandte Chemie,* 2006, vol. 118, 7150-7153
- **K. YASUDA ; P. SCHMUKI.** *Electrochimica Acta,* 2007, vol. 52, 4053
- **H. TSUCHIYA ; T. AKAKI ; J. NAKATA ; D. TERADA ; N. TSUJI ; Y. KOIZUMI ; Y. MINAMINO ; P. SCHMUKI ; S. FUJIMOTO.** *Corrosion Science,* 2009, vol. 51, 1528
- **Y. C. NAH ; A. GHICOV ; D. KIM ; S. BERGER ; P. SCHMUKI.** *Journal of American Chemical Society,* 2008, vol. 130, 16154
- **N. K. SHRESTHA ; Y. C. NAH ; H. TSUCHIYA ; P. SCHMUKI.** *Chemical Communications,* 2009, vol. 15, 2008
- **H. TSUCHIYA ; S. BERGER ; J. M. MACAK ; A. GHICOV ; P. SCHMUKI.** *Electrochemistry Communications,* 2007, vol. 9, 2397

• **N. ISHIDA ; D. FUJITA.** Superhydrophilic TiO2 surfaces generated by reactive oxygen treatment. *J. Vac. Sci. Technol. A,* 2012, vol. 30, 051402